# EUROPÄISCHE PATENTSCHRIFT

(11) **EP 0 638 376 B1**
(45) Veröffentlichungstag und Bekanntmachung des Hinweises auf die Patenterteilung: **04.09.1996**
(21) Anmeldenummer: 94109925.1
(22) Anmeldetag: 28.06.1994
(51) Int. Cl.: B21D 22/20, B05C 1/10

(54) **Vorrichtung zum steuerbaren Befetten von Werkstücken mit über einen Riementrieb und eine Antriebswelle von einem Motor gedrehten Befettungswalzen**
Device for controllable greasing of work pieces with greasing rolls driven by a motor with a belt drive and a primary shaft
Dispositif pour le graissage gouvernable des pièces à usiner à cylindres de graisse actionnés par un moteur avec une courroie de transmission et un arbre menant

(30) Priorität: 17.07.1993 DE 4324052
(43) Veröffentlichungstag der Anmeldung: 15.02.1995
(73) Patentinhaber: ZIBULLA & SOHN GMBH Raziol-Schmierungstechnik, D-58642 Iserlohn (DE)
(72) Erfinder: Zibulla, Georg Gisbert, Dipl.-Ing., D-58119 Hagen (DE)
(74) Vertreter: Patentanwälte Ostriga & Sonnet

(56) Entgegenhaltungen:
- EP-A- 0 499 704
- DE-A- 3 246 891
- DE-A- 4 015 546
- DE-U- 8 506 390

## Beschreibung

Die Erfindung betrifft eine Vorrichtung zum steuerbaren Befetten von Werkstücken in Band- oder Platinenform mit mehreren mit fettdurchlässigem Material versehenen, hohlen sowie koaxial zueinander ausgerichteten Befettungswalzen, die jeweils auf einer Hohlachse drehbar gelagert und von einem Riementrieb antreibbar sind, der über eine in einem Gehäuse oder einem Gestell gelagerte Antriebswelle mit einem Motor in Antriebsverbindung steht, wobei die Befettungswalzen über Druckmittelzylinder an der Werkstückfläche ansetzbar sind.

Bei einer durch offenkundige Vorbenutzung bekannt gewordenen Vorrichtung dieser Art wird eine jede Befettungswalze mittels einer Linearführung etwa senkrecht zu dem zu befettenden Werkstück über einen oder mehrere Druckmittelzylinder angesetzt und wieder davon abgehoben, sobald die gewünschte Befettung beendet ist. Der einzelne Riementrieb einer jeden Befettungswalze wird von der in einem Gehäuse oder einem Gestell gelagerten Antriebswelle angetrieben. Diese Antriebswelle ist somit stationär gelagert, wohingegen durch das Abheben der Befettungswalze vom Werkstück deren Drehachse sich einmal in kürzerer und einmal in größerer Entfernung von der Drehachse der Antriebswelle befindet. Dabei ist der Ausdruck "Drehachse" geometrisch im Sinne einer Symmetrieachse zu verstehen.

Durch diese unterschiedliche Entfernung weist der einzelne Riementrieb einer jeden Befettungswalze je nach deren Anlage an dem zu befettenden Werkstück bzw. in deren abgehobener Lage eine unterschiedliche Riemenspannung auf. Diese Riemenspannung kann daher nur in einer bestimmten Entfernung zwischen der Drehachse der Antriebswelle und der Drehachse einer Befettungswalze optimal gestaltet werden. Diese optimale Entfernung zur Erzielung der optimalen Riemenspannung wird tunlichst so gewählt, daß er bei der Anlage der Befettungswalze an dem betreffenden Werkstück erreicht wird. Das aber wiederum hat bei einer Linearzuführung den Nachteil, daß bei einem Abhub der Befettungswalze vom Werkstück sich die Riemenspannung vergrößert, sich damit die Reibungskräfte auf die Linearführung erhöhen und möglicherweise auch die Druckmittelzylinder Biegekräften ausgesetzt werden. Die Vorsehung von bekannten Spannrollen kommt bei derartigen Vorrichtungen sowohl aus Platz- als auch aus Kostengründen nicht in Betracht.

Von diesem Stand der Technik ausgehend, liegt der Erfindung die Aufgabe zugrunde, eine Vorrichtung der eingangs genannten Art zu schaffen, deren einzelne Riementriebe zum Antrieb der Befettungswalzen unabhängig von deren Arbeitslage sich durch eine konstante Riemenspannung auszeichnen und dennoch präzise an die zu befettende Werkstückfläche über die Druckmittelzylinder anzusetzen und davon abzuheben sind.

Diese Aufgabe wird in Verbindung mit dem eingangs genannten Gattungsbegriff erfindungsgemäß dadurch gelöst, daß die Hohlachse über einen Hebel schwenkbar auf der Antriebswelle gelagert ist und die Schwenkbewegung dieses Hebels von einem Druckmittelzylinder durchführbar ist. Durch diese Anordnung bewegt sich eine jede Hohlachse mit ihrer Befettungswalze beim Ansetzen und beim Abheben an die betreffende Werkstückfläche um die Drehachse der Antriebswelle auf einer Kreisbahn mit einem Radius, der gleich dem Abstand der Drehachse der Antriebswelle von der Drehachse der jeweiligen Befettungswalze ist. Da dieser Abstand aufgrund des starren Hebels konstant bleibt, bleibt auch die Riemenspannung der einzelnen Riementriebe konstant. Dadurch kann eine jede Befettungswalze mit der jeweils gewünschten und von der Antriebswelle von einem Motor erteilten Umfangsgeschwindigkeit an die Oberfläche des betreffenden Werkstückes angesetzt und von diesem mit derselben Geschwindigkeit wieder abgehoben werden, da ein - möglicher - Schlupf aufgrund der konstanten Riemenspannung gleichfalls konstant bleibt.

Es sei an dieser Stelle erwähnt, daß aus der gattungsfremden DE-OS 32 46 891 bereits Befettungswalzen bekannt sind, die über einen mehrarmigen Hebel mittels eines Druckmittelzylinders an die betreffende Werkstückoberfläche angesetzt und wieder davon abgehoben werden können. Dabei bewegen sich die Befettungswalzen gleichfalls auf einer Kreisbahn. Diese Befettungswalzen verfügen jedoch über keinen eigenen Antrieb, sondern wirken mit Gegenrollen zusammen und werden durch Rollreibung geschleppt. Hier taucht das Problem des Erfindungsgegenstandes nicht auf, da ein Riementrieb ebenso wie eine Antriebswelle und ein Antriebsmotor fehlen.

Zum Anstellen der jeweiligen Befettungswalzen an die Werkstückoberfläche und zum Abheben davon kann der Druckmittelzylinder an unterschiedlichen Gegenständen und Orten der Vorrichtung angelenkt werden.

Nach einer ersten Ausführungsform ist der Druckmittelzylinder mit einem Ende am Gehäuse oder am Gestell und mit seinem anderen Ende am Hebel jeweils gelenkig angeordnet. Diese gelenkige Anordnung ist unbedingt erforderlich, damit der Druckmittelzylinder der jeweiligen Schwenkbewegung des Hebels folgen kann, um diese nicht zu behindern.

Nach einer zweiten vorteilhaften Ausführungsform ist der Druckmittelzylinder mit einem Ende am Gehäuse oder am Gestell und mit seinem anderen Ende entweder an der Hohlachse oder an einem damit verbundenen Rahmen der Hohlachse jeweils gelenkig angebracht. Da die jeweilige tangentiale Ansatzlinie einer jeden Befettungswalze durch den während ihres Ansetzens an der Werkstückfläche in seiner Länge unveränderbaren Hebel stets exakt definiert ist, erfolgt über die Druckmittelzylinder ein ebenso sicheres Ansetzen wie auch Abheben der Befettungswalzen von der Werkstückfläche.

Auch bezüglich der Halterung der Befettungswalze bzw. ihrer Hohlachse an dem Hebel gestattet die Erfindung mehrere Ausführungsformen.

So ist nach einer ersten vorteilhaften Ausführungsform die Hohlachse einer Befettungswalze mit nur einem Ende fliegend an dem Hebel gehaltert und über diesen schwenkbar auf der Antriebswelle gelagert. Diese Art der fliegenden Halterung der Hohlachse an dem Hebel ist jedoch auf relativ kurze und leichte Befettungswalzen beschränkt.

Für längere und schwerere Befettungswalzen ist deren Hohlachse vorteilhaft an beiden Enden an je einem Hebel gehaltert, die vorteilhaft durch einen Rahmen miteinander verbunden sind, und über diese beiden Hebel schwenkbar auf der Antriebswelle gelagert. Dadurch wird eine Verkantung der Befettungswalze vermieden sowie deren schwingungsfreie Halterung sichergestellt.

Um die Spannung eines jeden einzelnen Riementriebs vor Inbetriebnahme einjustieren zu können, besteht jeder Hebel vorteilhaft aus zwei Teilhebeln, die an ihren von der Antriebswelle einerseits und der Hohlachse andererseits abgewandten Enden abstandsverstellbar miteinander gekuppelt sind. Diese Kuppelung kann beispielsweise dadurch erfolgen, daß die beiden Teilhebel aus im Querschnitt unterschiedlich breiten, U-förmigen Profilen bestehen, die teleskopierend ineinanderschiebbar und mittels eines Längsschlitzes und einer Klemmschraube in jeder beliebigen Stellung stufenlos wieder arretierbar sind. Diese Teilhebel können jedoch auch aus teleskopierend ineinandergreifenden, im Querschnitt kreisrunden Rohrprofilen bestehen, von denen beispielsweise das äußere zur Längenverstellung mit einem Längsschlitz und das Innenprofil mit einer zur Längsrichtung querverlaufenden Gewindebohrung zum Eingriff einer Klemmschraube versehen ist.

Zur kompakten Gestaltung der erfindungsgemäßen Vorrichtung sind vorteilhaft mehrere Hebel für die Verschwenkung von mehreren Befettungswalzen gleicher Drehrichtung auf einer gemeinsamen Antriebswelle angeordnet und mehrere Antriebswellen wiederum über einen gemeinsamen Riemen- oder Kettentrieb von dem Motor angetrieben. Zur Erzielung einer größeren Laufruhe sowie aus Kostengründen ist jedoch auch zum Antrieb der Antriebswellen einem Riementrieb der Vorzug zu geben.

Ein Ausführungsbeispiel der Erfindung ist in der Zeichnung dargestellt. Dabei zeigen:
Fig. 1 die Ansicht auf eine erfindungsgemäße Vorrichtung in Durchlaufrichtung des zu befettenden Werkstückes,
Fig. 2 die Ansicht entlang der Linie II-II von Fig. 1,
Fig. 3 die Ansicht in Richtung III von Fig. 1,
Fig. 4 die Ansicht entlang der Linie IV-IV von Fig. 1 und

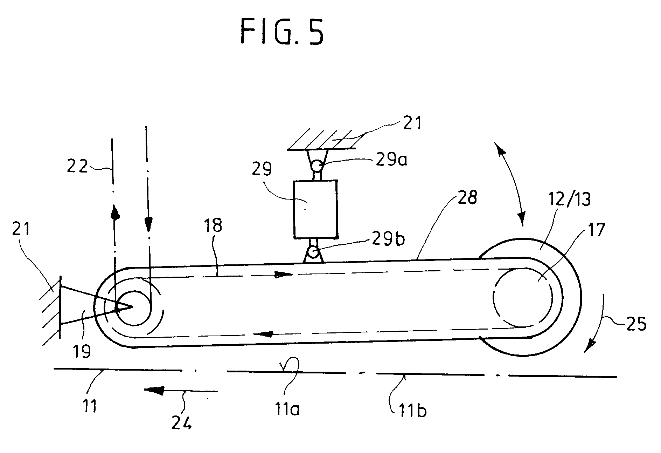

Fig. 5 eine schematische Ansicht zur Verdeutlichung insbesondere der Riementriebe der erfindungsgemäßen Vorrichtung.

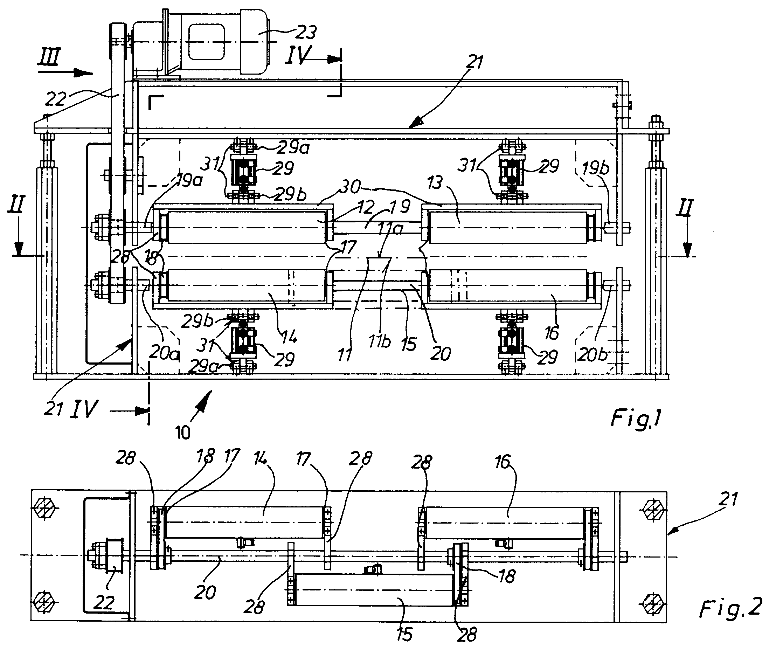

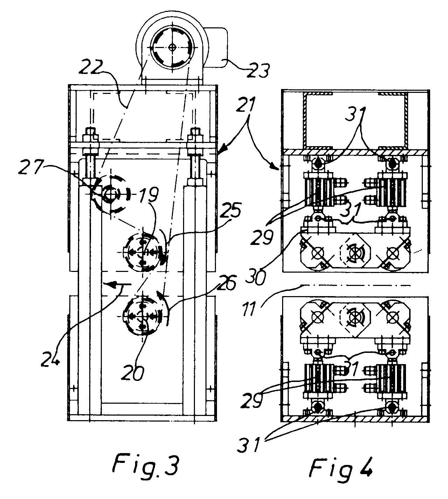

Die erfindungsgemäße Vorrichtung 10 zum steuerbaren Befetten von Werkstücken 11 mit einer Werkstückoberfläche 11a und einer Werkstückunterfläche 11b in Band- oder Platinenform, welches in den Figuren 1 und 4 strichpunktiert angedeutet ist, besteht aus mehreren mit fettdurchlässigem Material versehenen, hohlen sowie koaxial zueinander ausgerichteten Befettungswalzen 12-16. Von diesen sind die Befettungswalzen 12 und 13 oberhalb und die Befettungswalzen 14, 15 und 16 unterhalb des Werkstückes 11 angeordnet. In Fig. 1 ist die Befettungswalze 15 (s. a. Fig. 2) aus Gründen der Übersichtlichkeit nur strichpunktiert angedeutet. Dabei sind sowohl die Befettungswalzen 12 und 13 als auch die Befettungswalzen 14 und 16 zueinander koaxial ausgerichtet.

Jede der Befettungswalzen 12-16 ist auf nicht dargestellten Lagern auf einer drehunbeweglichen Hohlachse 17, die andeutungsweise in Fig. 1 erkennbar ist, drehbar gelagert und wird von einem besonders aus Fig. 2 erkennbaren Riementrieb 18 angetrieben.

Der Riementrieb 18 der Befettungswalzen 12 und 13 wird von Antriebswelle 19 und die Riementriebe der Befettungswalzen 14-16 werden von der weiteren Antriebswelle 20 angetrieben. Beide Antriebswellen 19, 20 sind mit beiden Enden 19a und 19b und 20a und 20b in einem Gestell 21 gelagert, welches selbst das Gehäuse oder ein Teil eines Gehäuses sein kann. Beide Antriebswellen 19, 20 werden an ihren Enden 19a und 20a über den aus den Figuren 1 und 3 ersichtlichen Riementrieb 22 von dem Motor 23 angetrieben.

Der Kraftfluß zum Antrieb einer jeden Befettungswalze 12-16 erfolgt somit vom Motor 23 über den aus den Figuren 1 und 3 ersichtlichen Riementrieb 22 sowie über die Enden 19a und 20a der Antriebswellen 19, 20 und schließlich über die einzelnen Riementriebe 18 auf die Befettungswalzen 12-16. Aufgrund der geschickten Führung des Riementriebs 22 dreht bei einer unterstellten Durchlaufrichtung des Werkstückes 11 gemäß dem Pfeil 24 von Fig. 3 die Antriebswelle 19 in Richtung des Pfeiles 25 und die Antriebswelle 20 in Richtung des Pfeiles 26. Mit 27 ist eine Spannrolle des Riementriebes 22 bezeichnet.

Erfindungsgemäß ist eine jede Hohlachse 17 über einen Hebel 28, der insbesondere aus Fig. 2 ersichtlich ist, auf der jeweiligen Antriebswelle 19, 20 gelagert, wobei die Schwenkbewegung dieser Hebel 28 von mindestens einem Druckmittelzylinder 29 (s. Fig. 1) durchführbar ist. Im dargestellten Fall der Fig. 1 sind die Druckmittelzylinder 29 mit einem Ende 29a am Gehäuse bzw. am Gestell 21 und mit ihrem anderen Ende 29b an einem mit der Hohlachse 17 verbundenen Rahmen 30 jeweils gelenkig angebracht. Die Gelenke sind mit 31 bezeichnet. Es ist jedoch auch möglich, die Druckmittelzylinder 29 an einem Ende 29a am Gehäuse oder Gestell 21 - wie dargestellt - und mit ihrem anderen Ende 29b am Hebel 28 über Gelenke 31 anzuordnen.

Auch bezüglich der Halterung der Hohlachse 17 an den Hebeln 28 sind mehrere Ausführungsformen möglich. In der dargestellten Ausführungsform der Figuren 1 und 2 ist eine jede Hohlachse 17 der Befettungswalzen 12-16 an beiden Enden an je einem Hebel 28 gehaltert und über diese 28 schwenkbar auf der Antriebswelle 19, 20 gelagert. Dabei sind beide Hebel über einen Rahmen 30 miteinander verbunden.

Nach einer zweiten, nicht dargestellten Ausführungsform, insbesondere für kurze und leichte Befettungswalzen 12-16, sind deren Hohlachsen 17 mit nur einem Ende fliegend an dem Hebel 28 gehaltert und über diesen 28 schwenkbar auf ihrer jeweiligen Antriebswelle 19, 20 gelagert.

Um die Riemenspannung der einzelnen Riemenantriebe 18 der Befettungswalzen 12-16 einstellen zu können, wird jeder Hebel 28 aus zwei Teilhebeln hergestellt, die an ihren von der Antriebswelle 19, 20 einerseits und der Hohlachse 17 andererseits abgewandten Enden durch teleskopierendes Eingreifen abstandsverstellbar miteinander gekuppelt sind. Insoweit wird auf die diesbetreffenden Ausführungen der Beschreibungseinleitung verwiesen.

Wie aus den Figuren 1 bis 3 entnommen werden kann, sind zur Sicherstellung einer kompakten Anordnung mehrere Hebel 28 für die Verschwenkung von mehreren Befettungswalzen 12, 13 einerseits und 14-16 andererseits gleicher Drehrichtung gemäß den Pfeilen 25 bzw. 26 auf einer gemeinsamen Antriebswelle 19 bzw. 20 angeordnet, wobei die Antriebswellen 19, 20 von nur einem und damit gemeinsamen Riementrieb 22 von dem Motor 23 angetrieben werden.

Wie aus den Figuren 1 und 2 ersichtlich ist, sind sämtliche Hohlachsen 17 der Befettungswalzen 12-16 beidendig in zwei Hebeln 28 gehaltert, die über einen Rahmen 30 (s. Fig 1) miteinander verbunden sind. Dadurch können die Druckmittelzylinder 29 mit den Gelenken 31 an jeder beliebigen Stelle entweder der Hebel 28 oder an dem sie verbindenden Rahmen 30 angreifen, was im dargestellten Fall der Fig. 1 etwa in dessen Mitte erfolgt. Somit ist auch zur Anstellung einer einzigen Befettungswalze 12-16 an der jeweiligen Werkstückoberfläche 11a oder Werkstückunterfläche 11b im Gegensatz zu bekannten Vorrichtungen nach dem Stand der Technik auch nur noch ein Druckmittelzylinder 29 erforderlich.

## Patentansprüche

1. Vorrichtung zum steuerbaren Befetten von Werkstücken (11) in Band- oder Platinenform mit mehreren mit fettdurchlässigem Material versehenen, hohlen sowie koaxial zueinander ausgerichteten Befettungswalzen (12-16), die jeweils auf einer Hohlachse (17) drehbar gelagert und von einem Riementrieb (18) antreibbar sind, der über eine in einem Gehäuse oder einem Gestell gelagerte Antriebswelle (19,20) mit einem Motor (23) in Antriebsverbindung steht, wobei die Befettungswalzen (12-16) über Druckmittelzylinder (29) an der Werkstückfläche (11a,11b) ansetzbar sind, dadurch gekennzeichnet, daß die Hohlachse (17) über einen Hebel (28) schwenkbar auf der Antriebswelle (19, 20) gelagert ist und die Schwenkbewegung dieses Hebels (28) von einem Druckmittelzylinder (29) durchführbar ist.

2. Vorrichtung nach Anspruch 1, dadurch gekennzeichnet, daß der Druckmittelzylinder (29) mit einem Ende (29a) am Gehäuse oder am Gestell (21) und mit seinem anderen Ende (29b) am Hebel (28) jeweils gelenkig angeordnet ist.

3. Vorrichtung nach Anspruch 1, dadurch gekennzeichnet, daß der Druckmittelzylinder (29) mit einem Ende (29a) am Gehäuse oder am Gestell (21) und mit seinem anderen Ende (29b) entweder an der Hohlachse (17) oder an einem damit verbundenen Rahmen (30) der Hohlachse (17) jeweils gelenkig angebracht ist.

4. Vorrichtung nach einem der Ansprüche 1 bis 3, dadurch gekennzeichnet, daß die Hohlachse (17) einer Befettungswalze (12-16) mit nur einem Ende fliegend an dem Hebel (28) gehaltert und über diesen (28) schwenkbar auf der Antriebswelle (19, 20) gelagert ist.

5. Vorrichtung nach einem der Ansprüche 1 bis 3, dadurch gekennzeichnet, daß die Hohlachse (17) einer Befettungswalze (12-16) an beiden Enden an je einem Hebel (28) gehaltert und über diesen (28) schwenkbar auf der Antriebswelle (19, 20) gelagert ist.

6. Vorrichtung nach einem der Ansprüche 1 bis 5, dadurch gekennzeichnet, daß jeder Hebel (28) aus zwei Teilhebeln besteht, die an ihren von der Antriebswelle (19, 20) einerseits und der Hohlachse (17) andererseits abgewandten Enden abstandsverstellbar miteinander gekuppelt sind.

7. Vorrichtung nach einem der Ansprüche 1 bis 6, dadurch gekennzeichnet, daß mehrere Hebel (28) für die Verschwenkung von mehreren Befettungswalzen (12, 13; 14,-16) gleicher Drehrichtung (Pfeile 25; 26) auf einer gemeinsamen Antriebswelle (19; 20) angeordnet und mehrere Antriebswellen (19, 20) über einen gemeinsamen Riemen- oder Kettentrieb (22) von dem Motor (23) antreibbar sind.

8. Vorrichtung nach einem der Ansprüche 1 bis 7, dadurch gekennzeichnet, daß der Antrieb (22) der Antriebswellen (19, 20) aus einem Riementrieb besteht.

## Claims

1. A device for the controllable greasing of workpieces (11) in strip or sheet bar form with a plurality of hollow greasing rollers (12 - 16), which are provided with grease-permeable material, are aligned coaxial to one another, are rotatably mounted on a hollow axle (17) in each case and are drivable by means of a belt drive (18), which is drivably connected via a drive shaft (19, 20) mounted in a housing or a frame to a motor (23), it being possible to apply the greasing rollers (12 - 16) to the workpiece surface (11a, 11b) via pressure medium cylinders (29), characterised in that the hollow axle (17) is pivotably mounted on the drive shaft (19, 20) via a lever (28) and the pivoting movement of this lever (28) can be effected by a pressure medium cylinder (29).

2. A device according to claim 1, characterised in that the pressure medium cylinder (29) is articulatedly connected at one end (29a) to the housing or frame (21) and at its other end (29b) to the lever (28).

3. A device according to claim 1, characterised in that the pressure medium cylinder (29) is articulatedly connected at one end (29a) to the housing or frame (21) and at its other end (29b) either to the hollow axle (17) or a frame (30) of the hollow axle (17) connected therewith.

4. A device according to one of claims 1 to 3, characterised in that the hollow axle (17) of a greasing roller (12 - 16) is cantilever mounted on the lever (28) at one end only and is pivotably mounted on the drive shaft (19, 20) via said lever (28).

5. A device according to one of claims 1 to 3, characterised in that the hollow axle (17) of a greasing roller (12 - 16) is mounted at both ends on a lever (28) and is pivotably mounted on the drive shaft (19, 20) via said lever (28).

6. A device according to one of claims 1 to 5, characterised in that each lever (28) is formed by two partial levers, which are coupled to one another in a distance-variable manner at their ends remote from the drive shaft (19, 20) on the one hand and the hollow axle (17) on the other.

7. A device according to one of claims 1 to 6, characterised in that a plurality of levers (28) for pivoting a plurality of greasing rollers (12, 13; 14,-16) in the same direction of rotation (arrows 25; 26) are arranged on a common drive shaft (19; 20) and a plurality of drive shafts (19, 20) are drivable by the motor (23) via a common belt or chain drive (22).

8. A device according to one of claims 1 to 7, characterised in that the drive (22) of the drive shafts (19, 20) is formed by a belt drive.

## Revendications

1. Dispositif pour le graissage contrôlé de pièces (11) sous la forme de bandes ou de plaques, comprenant plusieurs rouleaux graisseurs creux (12 à 16) qui sont pourvus d'une matière perméable à la graisse, qui sont orientés d'une manière coaxiale les uns par rapport aux autres, qui sont chacun montés tournants sur un axe creux (17) et qui peuvent être entraînés par un mécanisme à courroie (18), celui-ci étant en liaison d'entraînement avec un moteur (23) par l'intermédiaire d'un arbre d'entraînement (19, 20) monté dans un carter ou dans un bâti, cependant que les rouleaux graisseurs (12 à 16) peuvent être appliqués sur la surface (11a, 11b) de la pièce par l'intermédiaire de vérins à fluide sous pression (29), caractérisé par le fait que l'axe creux (17) est monté pivotant sur l'arbre d'entraînement (19, 20) par l'intermédiaire d'un levier (28), et que le déplacement en pivotement de ce levier (28) peut être produit par un vérin à fluide sous pression (29).

2. Dispositif selon la revendication 1, caractérisé par le fait que le vérin à fluide sous pression (29) est à chaque fois monté d'une manière articulée sur le carter ou sur le bâti (21) par une extrémité (29a) et sur le levier (28) par son autre extrémité (29b).

3. Dispositif selon la revendication 1, caractérisé par le fait que le vérin à fluide sous pression (29) est à chaque fois monté d'une manière articulée sur le carter ou sur le bâti (21) par une extrémité (29a) et, par son autre extrémité (29b), soit sur l'axe creux (17), soit sur un cadre (30) de l'axe creux (17) qui est relié à celui-ci.

4. Dispositif selon l'une des revendications 1 à 3, caractérisé par le fait que l'axe creux (17) d'un rouleau graisseur (12 à 16) n'est maintenu sur le levier (28) que par une extrémité et d'une manière flottante, et qu'il est monté pivotant sur l'arbre d'entraînement (19, 20) par l'intermédiaire de ce levier (28).

5. Dispositif selon l'une des revendications 1 à 3, caractérisé par le fait que l'axe creux (17) d'un rouleau graisseur (12 à 16) est maintenu par ses deux extrémités sur un levier (28) à chaque fois, et qu'il est monté pivotant sur l'arbre d'entraînement (19, 20) par l'intermédiaire de ces leviers (28).

6. Dispositif selon l'une des revendications 1 à 5, caractérisé par le fait que chaque levier (28) est constitué par deux leviers partiels qui sont accouplés entre eux avec une distance variable à leurs extrémités opposées à l'arbre d'entraînement (19, 20), d'une part, et à l'axe creux (17), d'autre part.

7. Dispositif selon l'une des revendications 1 à 6, caractérisé par le fait que plusieurs leviers (28) destinés au pivotement de plusieurs rouleaux graisseurs (12, 13 ; 14 à 16) dont le sens de rotation est le même (flèches 25 ; 26) sont disposés sur un arbre d'entraînement commun (19 ; 20), et que plusieurs arbres d'entraînement (19, 20) peuvent être entraînés par le moteur (23) par l'intermédiaire d'un mécanisme commun à courroie ou à chaîne (22).

8. Dispositif selon l'une des revendications 1 à 7, caractérisé par le fait que l'entraînement (22) des arbres d'entraînement (19, 20) est constitué par un mécanisme à courroie.
